# EUROPÄISCHE PATENTANMELDUNG

(11) **EP 2 527 945 A2**
(43) Veröffentlichungstag der Anmeldung: **28.11.2012**
(21) Anmeldenummer: 12169170.3
(22) Anmeldetag: 23.05.2012
(51) Int. Cl.: G05D 16/20

(54) **Druckregelventil mit Blende**

(30) Priorität: 27.05.2011 DE 102011103844
(71) Anmelder: SVM Schultz Verwaltungs-GmbH & Co. KG, 87700 Memmingen (DE)
(72) Erfinder: Scherer, Georg, 87757 Kirchheim (DE); Mang, Helmut, 87700 Memmingen (DE); Schreiber, Florian, 89284 Kadeltshofen (DE)
(74) Vertreter: Pfister, Stefan Helmut Ulrich

(57) **Zusammenfassung**

Die Erfindung betrifft ein elektromagnetisches Druckregelventil, welches ein Magnetteil und ein Ventilteil aufweist. Das Magnetteil besitzt wenigstens eine elektrisch ansteuerbare Spule, einen Spulenkern und einen verschiebbar geführten Anker. Das Ventilteil besitzt einen Zulauf für das unter Druck stehende Medium, einen Rücklauf und einen Verbraucheranschluss. Das Ventilteil besitzt mindestens zwei, je durch ein Ventilelement verschließbare Sitzventile.

## Beschreibung

Die Erfindung betrifft ein elektromagnetisches Druckregelventil mit einem Magnetteil aus wenigstens einer elektrisch ansteuerbaren Spule, einem Spulenkern und einem verschiebbar geführten Anker und einem Ventilteil, das einen Zulauf für das unter Druck stehende Medium, einen Rücklauf und einen Verbraucheranschluss aufweist. Das Ventilteil weist dabei mindestens zwei, je durch ein Ventilelement verschließbare Sitzventile auf. Die Sitzventile beziehungsweise die Ventilelemente sind mit dem Anker in Wirkverbindung. An dem, in Strömungsrichtung des Mediums gesehenen, ersten Sitzventil ist ein loses Ventilelement vorgesehen.

Gattungsgemäße elektromagnetische Druckregelventile sind zum Beispiel aus der Europäischen Patentanmeldung EP 1 004 066 bekannt.

Gattungsgemäße Druckregelventile finden zum Beispiel in Automatikgetrieben in Kraftfahrzeugen Verwendung. Diese Druckregelventile sind dabei so aufgebaut, dass in Strömungsrichtung des Mediums im Zulauf ein erstes Sitzventil angeordnet ist, welches den Verbraucheranschluss vom Zulauf trennt. Über ein zweites Sitzventil ist der Rücklauf mit dem Zulauf verbindbar. Am Zulauf liegt das unter Druck stehende Medium an, die Anordnung ist so gewählt, dass das Ventilelement von dem Medienstrom auf den Dichtsitz des Sitzventiles gedrückt wird. Um den Druck zu regeln, wirkt der Anker eines elektromagnetischen Magnetteils des elektromagnetischen Druckregelventils über eine Betätigungsstange auf das Ventilelement. Das Magnetteil muss dabei eine Magnetkraft erzeugen, die größer ist, als der am Dichtsitz anliegende Flächendruck.

Einerseits wird angestrebt, die Querschnittsfläche des Sitzventiles möglichst klein auszugestalten, um die resultierenden Öffnungskräfte, die vom Magnetteil erzeugt werden müssen, gering zu halten. Dadurch wird der Energieaufwand für das Öffnen des Druckregelventils ebenfalls gering gehalten. Auf der anderen Seite muss ein ausreichender Volumenstrom des zu steuernden Mediums vorgesehen werden, was die Fläche des Sitzventiles entsprechend beschränkt.

Die Anordnung ist so gewählt, dass das unter Druck stehende Medium das Ventilelement auf den Dichtsitz des Sitzventiles drückt und eine Betätigungsstange rückseitig auf der dem Druck abgewandten Seite am Ventilelement angreift und dieses durch Betätigung des Ankers vom Dichtsitz abhebt. Der effektive Volumenstrom wird daher durch die Querschnittsfläche der Betätigungsstange (im Bereich des Ventilelementes) ebenfalls reduziert.

Es ist Aufgabe der vorliegenden Erfindung, den Stand der Technik dahingehend zu verbessern, dass bei gleicher Ausstattung des Magnetteils mit den gattungsgemäßen Druckregelventilen ein größerer Volumenstrom regelbar ist.

Zur Lösung dieser Aufgabe geht die Erfindung aus von einem elektromagnetischen Druckregelventil, wie eingangs beschrieben, und schlägt vor, dass das Ventilelement des ersten Sitzventiles von einer Betätigungsstange gegen den Druck des Mediums anstellbar ist und die Betätigungsstange stiftartig ausgebildet ist und in eine Regelstange eingesetzt ist, die mit dem Anker in Wirkverbindung steht.

Der erfindungsgemäße Vorschlag eröffnet überraschenderweise die Möglichkeit, Betätigungsstangen einzusetzen, deren Querschnitt deutlich geringer ist, wie Vorschläge nach dem Stand der Technik. Hierbei bestand das Problem, dass eine zerspanende Bearbeitung der oftmals sehr filigranen Betätigungsstangen nur bis zu einer gewissen Bauteilgrenze, das heißt einem gewissen Druchmesser, möglich ist, da die in der Regel unvermeidlichen radialen Bearbeitungskräfte die Bauteile, die üblicherweise einen Durchmesser von weniger als 1 mm aufweisen, bei der Bearbeitung leicht verbiegen können und somit unbrauchbar sind. Eine einstückige Ausgestaltung der Betätigungsstange zusammen mit der Regelstange kann daher sehr aufwändig werden, weswegen es sehr viel günstiger ist, auch wenn es einen zusätzlichen Arbeitsschritt erfordert, in die Regelstange an ihrem dem Ventilelemente des ersten Sitzventils zugewandten Ende eine separate Betätigungsstange einzusetzen.

Überraschenderweise bietet die Zweiteiligkeit aber auch noch weitere, zusätzliche Möglichkeiten. So ist es möglich, dass die Betätigungsstange aus einem anderen Material gebildet ist als die Regelstange und durch diese Ausgestaltung die Betätigungsstange daher zusätzliche Eigenschaften aufweisen kann, was in einer einstückig ausgeführten Regel-Betätigungsstange sehr aufwändig und kostenintensiv oder gar nicht zu realisieren wäre. So ist zum Beispiel vorgesehen, dass nur die Betätigungsstange gehärtet wird, um somit einem frühzeitigen Aufbürsten der dauerhaft auf das Ventilelement einwirkenden vorderen Ende der Betätigungsstange entgegenzuwirken. Wird dieses Aufbürsten zuverlässig vermieden, erreicht man unmittelbar eine entsprechende Lebensdauerverlängerung des erfindungsgemäßen elektromagnetisch betätigten Druckregelventiles. Auch wenn dieses zusätzliche Bauteil sowohl in der Herstellung wie auch in der Montage etwas aufwändiger ist wie eine einstückige Ausgestaltung, resultieren aus dem erfindungsgemäßen Vorschlag überraschenderweise doch überragende Vorteile, zum einen die Flexibilität der Anpassung des erfindungsgemäßen elektromagnetischen Druckregelventiles an unterschiedliche Anwendungsbereiche einerseits, aber auch eine erhebliche Verbesserung des erfindungsgemäßen Druckregelventiles selber, die in erhöhte Lebensdauer mündet.

Geschickterweise ist dabei die stiftartig ausgebildete Betätigungsstange in einem in einer stiftartigen Ausgestaltung favorisierten und optimierten Verfahren hergestellt, bei welchem eine ausreichende Geradheit sichergestellt ist.

In einer weiteren Verbesserung schlägt die Erfindung daher vor, dass an dem in Strömungsrichtung des Mediums gesehenen ersten Sitzventil der Durchmesser der Betätigungsstange kleiner 0,49 mm, insbesondere kleiner 0,45 mm, bevorzugt kleiner 0,40 mm ist beziehungsweise insbesondere einen Durchmesser von weniger als 0,3 mm, bevorzugt weniger als 0,25 mm aufweist. Die erfindungsgemäße Anordnung erlaubt es, diese filigranen, nadelartigen Betätigungsstangen in hoher Exaktheit und Geradheit unabhängig von der Regelstange zu produzieren und so auch sehr kleine Durchmesser zu realisieren, die bei unverändertem Durchmesser der Blendenöffnung beziehungsweise der Fläche des Dichtsitzes bei unveränderten Betriebsparametern einen höheren Medienstrom erlaubt.

An dieser Stelle ist auch zu bemerken, dass die erfindungsgemäße Aufgabe auch durch ein elektromagnetisches Druckregelventil gelöst wird, das mit einem Magnetteil aus wenigstens einer elektrisch ansteuerbaren Spule, einem Spulenkern und einem verschiebbar geführten Anker sowie einem Ventilteil gebildet ist, wobei das Ventilteil wenigstens einen Zulauf für das unter Druck stehende Medium, wenigstens einen Rücklauf und wenigstens einen Verbraucheranschluss aufweist, wobei das Ventilteil wenigstens zwei, je durch ein Ventilelement verschließbare Sitzventile mit jeweils einem Dichtsitz aufweist, wobei die Ventilelemente mit dem Anker in Wirkverbindung stehen (diese Merkmale definieren insofern einen einstückigen Aufbau der Regel-Betätigungs-Stange) und an dem in Strömungsrichtung des Mediums gesehen ersten Sitzventil der Durchmesser der Betätigungsstange kleiner 0,49 mm, insbesondere kleiner 0,45 mm, bevorzugt kleiner 0,40 mm ist, insbesondere einen Durchmesser von weniger als 0,30 mm, bevorzugt weniger als 0,25 mm aufweist. Das heißt, die erfindungsgemäße Aufgabe wird auch durch eine einstückige Ausgestaltung von Betätigungsstange und Regelstange erreicht, was zum Beispiel dann durch ein entsprechend aufwändiges Herstellungsverfahren gerade des die Betätigungsstange bildenden Abschnittes der Regelstange resultiert. Der erfindungsgemäße Gedanke ist daher auf die zweiteilige Ausgestaltung in keinsterweise beschränkt zu sehen. Es ist klar, dass sich an diesem Gedanken der Erfindung alle anderen Merkmale dieser Anmeldung sinngemäß anschließen.

Alternativ beziehungsweise zusätzlich wird erfindungsgemäß vorgeschlagen, dass an dem in Strömungsrichtung des Mediums ersten Sitzventil das Verhältnis der Fläche des Sitzventiles (der Blende) zur Querschnittsfläche der Betätigungsstange größer 4,5, insbesondere größer 5, bevorzugt größer 6 ist, insbesondere bevorzugt größer 7, 8 oder auch 9 ist.

Es ist klar, dass es hierbei auf den Durchmesser der Betätigungsstange beziehungsweise der Querschnittsfläche der Betätigungsstange im Bereich des ersten Sitzventiles, also der Blende in diesem Bereich geht und insbesondere die geometrischen Daten der Betätigungsstange hier relevant sind, die in dem Bereich herrschen, wo die Betätigungsstange auf das Ventilelement wirken. Es ist gelungen, durch eine entsprechende Verringerung des Durchmessers der Betätigungsstange den effektiven Volumenstromquerschnitt bei geöffneten ersten Sitzventilen zu vergrößern.

Die Erfindung beansprucht insbesondere auch Durchmesser kleiner 0,48 mm, 0,47 mm, 0,46 mm wie auch kleiner 0,44.

Das Verhältnis der Fläche des Sitzventiles zur Querschnittsfläche der Betätigungsstange ist größer 4,5 -insbesondere größer 5; insbesondere größer 5,5; 6; 6,5; 7 oder 8.

Das vorgenannte Merkmal im Blick auf das Flächenverhältnis ist dabei sowohl bei der zweiteiligen Ausgestaltung von Betätigungsstange und Regelstange wie auch bei der einteilig realisierten Regel-Betätigungs-Stange realisierbar und im Rahmen dieser Anmeldung mitoffenbart.

In einer weiteren Verbesserung der Erfindung ist vorgesehen, dass an dem, in Strömungsrichtung des Mediums gesehenen, ersten Sitzventil die Ansichtsfläche der Betätigungsstange kleiner 1 mm², insbesondere kleiner 0,8 mm², bevorzugt kleiner 0,7 mm² ist. Die Ansichtsfläche der Betätigungsstange ist dabei die sichtbare Fläche einer seitlichen Betrachtung der Betätigungsstange, die in die Regelstange eingesetzt ist. Bei dieser Betrachtungsweise kommt neben dem Durchmesser der Betätigungsstange auch seine effektive Länge, also sein Überstand gegenüber dem Ende der Regelstange, in Betracht. Es ist klar, dass durch diesen Vorschlag auch sehr filigrane Betätigungsstangen realisierbar sind und erfindungsgemäß einsetzbar sind.

Auch zu diesem Merkmal ist wieder zu bemerken, dass es sowohl bei der zweiteiligen Ausgestaltung von Betätigungsstange und Regelstange wie auch bei der einteiligen Ausgestaltung bei einer kombinierten Regel-Betätigungs-Stange, was wiederum im Rahmen dieser Anmeldung gilt.

Der Effekt des erfindungsgemäßen Vorschlages ist, dass bei gleichbleibenden magnetischen Verhältnissen, das heißt, bei gleichbleibenden notwendigen Öffnungskräften für das Öffnen des ersten Sitzventiles der Volumenstrom durch das erste Sitzventil beziehungsweise die erste Blende entsprechend erhöht wird. Umgekehrt kann dieser Effekt nun dazu eingesetzt werden, das Magnetteil etwas schwächer auszulegen, um den gleichen Volumenstrom zu regeln. Eine kleinere Ausstattung des Magnetteils führt dabei letztendlich zu einer entsprechenden Energieersparnis im Betrieb.

In einer bevorzugten Ausgestaltung des Vorschlages steht die Betätigungsstange in die das erste Sitzventil beschreibende Blendenöffnung ein und der Durchmesser ist zumindest in diesem Bereich, in welchem die Betätigungsstange in die Blendenöffnung einsteht, konstant beziehungsweise im Wesentlichen konstant. Als im wesentlichen konstant kann zum Beispiel ein, bezogen auf diesen Bereich, ermittelter Durchschnittswert des Durchmessers dienen.

Des Weiteren ist vorgesehen, dass das Ventilelement des ersten Sitzventiles als lose Kugel ausgebildet ist, die in der geöffneten Stellung des Sitzventiles von der Betätigungsstange gegen den Strom des Mediums vom Dichtsitz abgehoben ist. Die Ausgestaltung des Ventilelementes als lose Kugel hat im Zusammenwirken mit einem kreisrunden Dichtsitz erhebliche Vorteile. Als lose Verbindung des Ventilelementes mit der Betätigungsstange ist zu verstehen, dass keine Einstückigkeit oder starre Verbindung zwischen diesen beiden Elementen vorgesehen sind, es also auch Zustände gibt, bei welchen zum Beispiel die Betätigungsstange bewegt wird und hieraus keine Bewegung des Ventilelementes resultiert.

Des Weiteren ist vorgesehen, dass an dem ersten Sitzventil auf der dem Dichtsitz abgewandten Seite eine insbesondere konusartige, insbesondere mit einem Öffnungswinkel von 45° bis 90° aufweisende Aufweitung vorgesehen ist. Üblicherweise wird das Ventilteil als Kunststoffspritzteil oder -Gussteil hergestellt. Es ist klar, dass es strömungsmechanisch von Vorteil ist, wenn in Strömungsrichtung gesehen eine möglichst kurze Blende oder Verjüngung im Strömungsweg angeordnet ist. Dies ist aber herstellungstechnisch schwierig zu realisieren, da hieraus sehr dünne Materialwände entstehen, die nicht mit hoher Stabilität reproduzierbar sind. Durch die Anordnung des abflussseitigen Konus wird erreicht, dass die Materialwand, die (auch) die Blende bildet, stärker ausgebildet wird, ohne dabei einen zusätzlichen Strömungswiderstand zu bilden. Der Vorschlag vereint daher eine gute Herstellbarkeit mit geringer Ausschussquote mit einer Anordnung, die strömungsmechanisch optimiert ist.

Geschickterweise ist dabei vorgesehen, dass sich zwischen dem Dichtsitz (auf diesem ruht im geschlossenen Zustand des Ventiles das Ventilelement) und der Aufweitung eine zylindrische Blendenöffnung befindet und das Verhältnis der Höhe der Blendenöffnung mit dem Durchmesser des Dichtsitzes kleiner 0,4, insbesondere kleiner 0,3 ist. Die zylindrische Blendenöffnung definiert letztendlich den Durchmesser des Dichtsitzes beziehungsweise die Blendenöffnung hat den gleichen Durchmesser wie der Dichtsitz. Diese Ausnehmung schließt nicht aus, dass auch auf der dem Ventilelement zugewandten Seite, der Dichtsitz von einem Konusring gebildet ist. Günstiger ist es aber, da dies zu kleineren Schließkräften führt, als Dichtsitz der Ringkante das dem Ventilelement zugewandten Randkante der Blendenöffnung zu wählen. In dieser Weise ist es auch in der Zeichnung gezeigt. Die Höhe der Blendenöffnung ist somit die Höhe des Zylinders, die definitionsgemäß entlang seiner Höhe einen gleichbleibenden Durchmesser aufweist. Durch eine möglichst geringe Höhe (in Strömungsrichtung des unter Druck stehenden Mediums) werden Strömungswiderstände reduziert.

Günstigerweise ist das Druckregelventil als Proportionaldruckregelventil ausgebildet, wobei zum Beispiel als Elektromagnet ein Elektroproportionalmagnet zum Einsatz kommt. Ein Elektroproportionalmagnet zeichnet sich dadurch aus, dass die Stellung des Ankers in weiten Bereichen proportional ist zur eingeprägten Stromstärke.

Der erfindungsgemäße Vorschlag, bei welchem eine von der Regelstange separat hergestellte und mit dieser zu verbindenden Betätigungsstange vorgesehen ist, hat den Vorteil, dass diese zum Beispiel aus gehärtetem Material gebildet sein kann und so einen erheblichen Beitrag zur Lebensdauererhöhung der erfindungsgemäßen Ventile beiträgt. Dabei ist die Betätigungsstange, insbesondere die dem Ventilelement zugewandte Betätigungsstangenspitze, aus gehärtetem Material gebildet und weist bevorzugt eine (Zug-)Festigkeit von mehr als 800 N/mm², insbesondere mehr als 900 N/mm² auf. Üblicherweise werden hierbei zum Beispiel (Zug-)Festigkeiten im Bereich zwischen 1000 N/mm² und 1300 N/mm², bevorzugt ca. 1200 N/mm² +/- 5 % eingesetzt.

Die Härtung ist insbesondere bei metallischen Werkstoffen ein gebräuchliches Mittel die Lebensdauer beziehungsweise Verschleißfestigkeit zu erhöhen. Alternativ dazu kann auch auf keramische Werkstoffe ausgewichen werden, weil sich gerade hier der erfindungsgemäße Ansatz der Zweiteiligkeit von Betätigungsstange und Regelstange positiv zeigt, da auch unterschiedliche Materialien in diesem Bereich verwendet werden können.

Geschickterweise ist dabei eine Schweiß-, Kleb-, Löt- oder Stemm- beziehungsweise Börtelverbindung zwischen der Betätigungsstange und der Regelstange vorgesehen. Neben den stofflichen Verbindungstechniken sind auch Klebeverbindungen, wie auch mechanische Verbindungstechniken, einsetzbar, die optimalste Verbindungstechnik ergibt sich aufgrund der zu kombinierenden Materialien und dem Einsatzbereich.

Geschickterweise ist die Regelstange an ihrem dem Ventilelement zugewandten Frontseite mit einer Bohrung ausgestattet, welche die Betätigungsstange aufnimmt und in welcher die Betätigungsstange auch befestigt beziehungsweise gehalten ist. Daher besitzt die Betätigungsstange bei der Herstellung oftmals eine größere axiale Länge, um einen ausreichenden Einstand in die Bohrung zu gewährleisten, hieraus resultiert auch eine gute mechanische Verbindung beziehungsweise Belastbarkeit der Betätigungsstange.

In einer bevorzugten Ausgestaltung der Erfindung ist vorgesehen, dass die Wirkverbindung zwischen dem Anker und dem Ventilelement gebildet ist durch eine einstückige beziehungsweise aus mehreren Elementen fest verbundene Einheit von Anker und Regelstange oder zumindest als Wirkverbindung eine Kraftübertragung zwischen den ansonsten einzeln beziehungsweise losen Elementen Anker und Regelstange vorgesehen ist.

Zu dem Begriff "Wirkverbindung" zählen alle Anordnungen zwischen dem elektromagnetisch bewegbaren Anker und der Regelstange beziehungsweise letztendlich der in der Regelstange gelagerten (oder auch einstückig angeformten) Betätigungsstange, die geeignet sind, die Bewegung des Ankers zu einer resultierenden Bewegung der Betätigungsstange und damit auch des damit zu bewegenden Ventilelementes zu erreichen. Hierzu zählen sowohl starre Verbindungen einzelner Elemente wie auch lose Anordnungen, die zum Beispiel durch entsprechende Federn oder andere Elemente zueinander vorgespannt oder anliegend realisiert sind.

In der Zeichnung ist die Erfindung in einem Ausführungsbeispiel schematisch dargestellt. Es zeigen:
- Fig. 1: in einer seitlichen Schnittdarstellung ein Ausschnitt des erfindungsgemäßen Druckregelventils,
- Fig. 2a, 2b: in zwei verschiedenen Stellungen das Detail des ersten Sitzventiles gemäß der Erfindung.

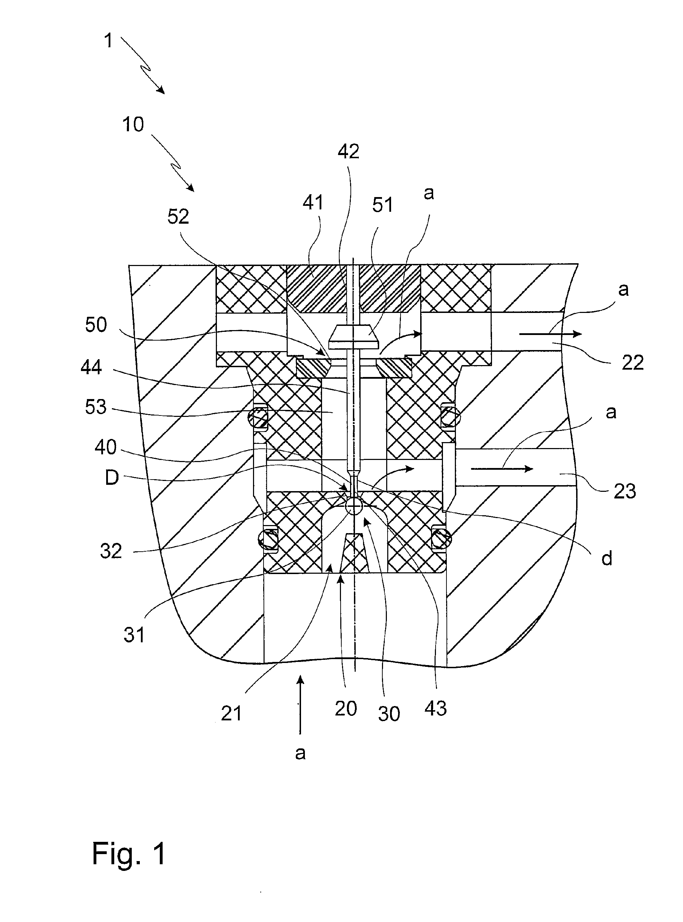

Ein erfindungsgemäßes elektromagnetisches Druckregelventil ist in Fig. 1 einer seitlichen Schnittdarstellung gezeigt. Das Druckregelventil 1 besteht dabei aus einem Magnetteil 10, das sich in der Zeichnung im oberen Bereich befindet. Das Magnetteil 10 umfasst zumindest eine elektrisch ansteuerbare Spule, einen Spulenkern und einen verschiebbar geführten Anker, der verschiebbar geführte Anker wirkt auf die Betätigungsstange 40, die den Magnetkern 41 in einer Durchdringungsbohrung 42 durchdringt.

Unterhalb des Magnetteils 10 schließt sich das Ventilteil 20 an. Das Ventilteil 20 ist gebildet unter anderem von dem Zulauf 21, der in der hier gezeigten Ansicht auf der Unterseite angeordnet ist, dem Rücklauf 22 und dem Verbraucheranschluss 23, der hier zwischen dem Zulauf 21 und dem Rücklauf 22 vorgesehen ist.

Mit einer Vielzahl von Pfeilen a ist die Strömungsrichtung des unter Druck stehenden Mediums, welches durch das Druckregelventil gesteuert oder geregelt wird, angedeutet. Das Medium fließt im Zulauf 21 unter Druck in das Druckreglerventil 1 ein und verläßt dieses entweder über den Verbraucheranschluss 23 und/oder den Rücklauf 22.

Die hier gezeigte Anordnung ist so gewählt, dass das Druckregelventil (mindestens) zwei Sitzventile 30, 50 aufweist.

Das in Strömungsrichtung a des Mediums im Zulauf 20 angeordnete erste Sitzventil 30 wird dabei gebildet von einem insbesondere lose angeordneten Ventilelement 31 (hier eine Kugel), das durch den Strömungsdruck des Mediums auf den Dichtsitz 32 des ersten Sitzventiles 30 gedrückt wird. Das hier gezeigte Ventilelement 31 ist zum Beispiel als Kugel ausgebildet.

Bei dem zweiten Sitzventil 50 ist das Ventilelement 51 als Dichtkörper auf der Betätigungsstange 40 ortsfest angeordnet und wirkt dort entsprechend der Stellung der Betätigungsstange, die von der Stellung des Ankers abhängig ist, mit dem Dichtsitz 52 des zweiten Sitzventiles zusammen.

Insbesondere ist das erste Sitzventil 30 für die Regelung des Druckes verantwortlich und zwischen dem Zulauf 21 und dem Verbraucheranschluss 23 angeordnet.

Das zweite Sitzventil 50 befindet sich dabei in Strömungsrichtung a des Mediums in einem Abzweigkanal 53 nach dem ersten Sitzventil 30 und verbindet diesen Abzweigkanal 53 (bei geöffneter Stellung des zweiten Sitzventiles 50) mit dem Rücklauf 22.

Es ist gut zu erkennen, dass das als Kugel ausgebildete Ventilelement 31 des ersten Sitzventiles 30 lose ist und das vordere Ende 43 der Betätigungsstange 40 von hinten (bezogen auf die Strömungsrichtung a des Mediums) auf das Ventilelement 31 wirkt. Somit kann bei entsprechender Betätigung der Betätigungsstange 40 (bei entsprechender Strombeaufschlagung des Elektromagneten und einer entsprechenden Bewegung des Ankers) die Betätigungsstange 40 das Ventilelement 31 an dem Dichtsitz 32 des ersten Sitzventiles abheben.

Die Kraft, die hierbei aufzuwenden ist, ergibt sich aus dem im Zulauf 21 anliegenden Mediendruck und der Durchlassfläche des ersten Sitzventiles 30, die auch als Blende, Blendenweite, Blendenöffnung 33 oder Fläche des Sitzventiles 31 zu verstehen ist.

Der effektive Volumenstrom, der durch das erste Sitzventil bei geöffneter Stellung des Sitzventiles strömen kann, wird einerseits durch den Durchmesser D des Sitzventiles 30 beziehungsweise Dichtsitzes 32 oder Blende beziehungsweise Blendenöffnung 33 und andererseits durch den Durchmesser d des vorderen, in die Blendenöffnung 33 einstehenden Bereichs 43 der Betätigungsstange 40, welches auf das Ventilelement 31 wirkt (sowohl im geschlossenen wie geöffneten Ventil/Sitzventil) beschränkt. Eine übermäßige Aufweitung des Blendendurchmessers D geht mit einer entsprechenden Erhöhung der Öffnungskräfte einher, weswegen hierüber eine Vergrößerung des Volumenstromes nicht problemlos möglich ist. Die erfindungsgemäß vorgeschlagene getrennte Ausgestaltung der Betätigungsstange 40 von der Regelstange 44 eröffnet die Möglichkeit auch sehr filigrane Betätigungsstangen zu realisieren, wodurch der Durchmesser der Betätigungsstange entsprechend reduziert wird. Das gleiche Ergebnis wird auch mit der alternativ beschriebenen Variante gezeigt, bei welcher eine einstückige Regel-Betätigungs-Stange vorgesehen ist und die Betätigungsstange einen verringerten Durchmesser von weniger als 0,49 mm aufweist. Durch die Reduzierung der Abmessungen der Störgrößen in der Blendenöffnung 33 ergibt sich eine Erhöhung des Volumenstromes durch das erste Sitzventil 30.

Zusätzlich wurde dabei gefunden, dass somit auch das Verhältnis der Fläche des ersten Sitzventiles 30 (der Blende des ersten Sitzventiles 30) zur Querschnittsfläche der Betätigungsstange 40 erheblich vergrößert werden kann und somit nunmehr größer 4,5 -insbesondere größer 5, bevorzugt größer 6 ist.

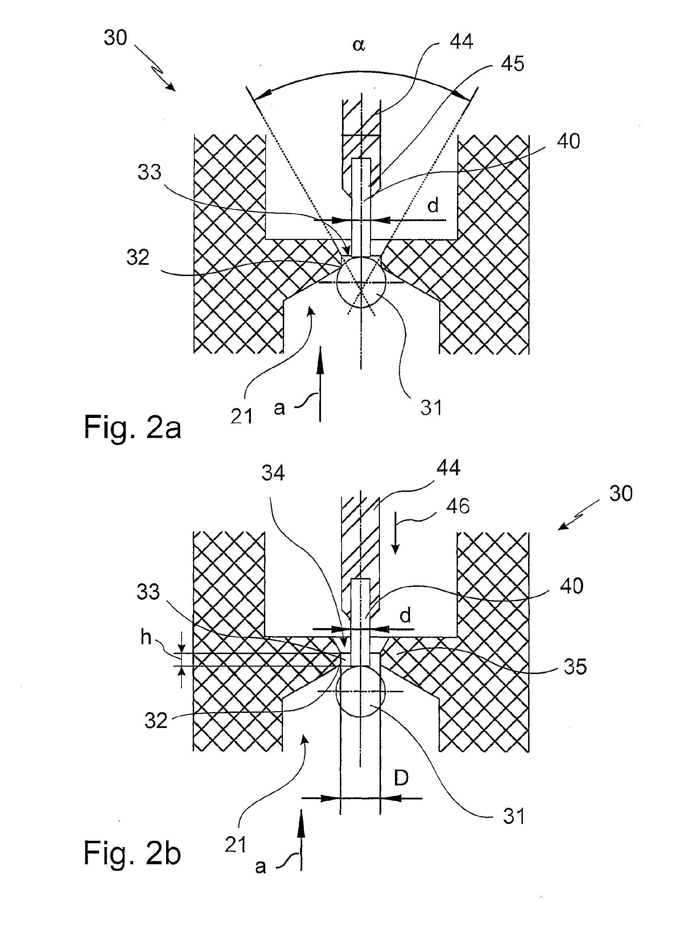

In Fig. 2a, 2b ist in einer vergrößerten seitlichen Schnittdarstellung die Verhältnisse an dem ersten Sitzventil 30 gezeigt.

In Fig. 2a ist die geschlossene Stellung des Sitzventiles 30 gezeigt, in Fig. 2b wurde die Regelstange 44 zum Beispiel aufgrund der Bewegung (siehe Pfeil 46) des (nicht gezeigten) Ankers derart in Richtung der Blendenöffnung 33 versetzt, dass die Betätigungsstange 40 das als Kugel ausgebildete Ventilelement 31 von dem Dichtsitz 32 des (ersten) Sitzventiles 30 abhebt.

Das Sitzventil 30 besteht aus dem Dichtsitz 32 und dem Ventilelement 31, das entsprechend der Stellung der Betätigungsstange 40 auf dem Dichtsitz 32 aufliegt und diesen schließt (Fig. 2a) oder abgehoben ist und somit öffnet (Fig. 2b).

Die Ausgestaltung des Dichtsitzes 32 ist angegeben durch einen in Fließrichtung a sich im Endbereich konisch verjüngenden Zulauf 21, wobei sich an dem Dichtsitz 32 eine zylindrisch ausgebildete Blendenöffnung 33 befindet, deren Durchmesser dem Durchmesser des Dichtsitzes 32 entspricht. Günstigerweise ist die Höhe h dieser zylindrischen Blendenöffnung 33 relativ kurz beziehungsweise gering, um den Strömungswiderstand beim Durchströmen des Mediums gering zu halten. Es schließt sich dann in Strömungsrichtung a nach der zylindrischen (bevorzugt kreisrunden Querschnitt) Blendenöffnung 33 eine insbesondere konische Aufweitung 34 an, deren Öffnungswinkel α im Bereich von 45° bis 90° liegt. Diese Aufweitung 34 führt dazu, dass der Materialsteg 35, welcher die Blende bildet, eine erheblich größere Dicke aufweist, als die Höhe h der Blendenöffnung 33. Die Materialstärke hier beträgt im Bereich des Sitzventiles (also Aufweitung 34 und Blendenöffnung 33) ca. das mindestens 1,5-, bevorzugt mindestens das Doppelte, insbesondere bevorzugt mindestens das 2,5- oder 3-fache der Höhe h der Blendenöffnung 33. Eine solche Ausgestaltung erleichtert erheblich die Herstellung der filigranen und in einem Kunststoffspritzprozess entstehenden Ventilteil 20.

Des Weiteren ergibt sich aus Fig. 2a, 2b wie die Betätigungsstange 40 in eine frontseitige Bohrung 45 der Regelstange 44 eingesetzt und dort in geeigneterweise befestigt ist.

Die Ansichtsfläche der Betätigungsstange 40 ergibt sich aus dem Flächenprodukt des Durchmessers d der Betätigungsstange und der sichtbaren, das heißt aus der Regelstange 44 überstehenden Länge der Betätigungsstange 40.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden, oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Elektromagnetisches Druckregelventil, mit einem Magnetteil (10) aus wenigstens einer elektrisch ansteuerbaren Spule, einem Spulenkern und einem verschiebbar geführten Anker und einem Ventilteil (20), das wenigstens einen Zulauf (21) für das unter Druck stehende Medium, wenigstens einen Rücklauf (22) und wenigstens einen Verbraucheranschluss (23) aufweist, wobei das Ventilteil (20) wenigstens zwei, je durch ein Ventilelement (31, 51) verschließbare Sitzventile (30, 50) mit jeweils einem Dichtsitz (32, 52) aufweist, wobei die Ventilelemente (31, 51) mit dem Anker in Wirkverbindung stehen und an dem, in Strömungsrichtung (a) des Mediums gesehenen, ersten Sitzventil (30) ein loses Ventilelement (31) vorgesehen ist, das von einer Betätigungsstange (40) gegen den Druck des Mediums anstellbar ist und die Betätigungsstange (40) stiftartig ausgebildet ist und in eine Regelstange (44) eingesetzt ist, die mit dem Anker in Wirkverbindung steht.

2. Druckregelventil nach Anspruch 1, **dadurch gekennzeichnet, dass** an dem, in Strömungsrichtung (a) des Mediums gesehenen, ersten Sitzventil (30) der Durchmesser (d) der Betätigungsstange (40) kleiner 0,49 mm, insbesondere kleiner 0,45 mm, bevorzugt kleiner 0,40 mm ist, insbesondere einen Durchmesser (d) von weniger als 0,30 mm, bevorzugt weniger als 0,25 mm aufweist.

3. Druckregelventil nach einem der vorhergehenden Ansprüche, **dadurch gekennzeichnet, dass** an dem in Strömungsrichtung (a) des Mediums ersten Sitzventil (30) das Verhältnis der Fläche des Sitzventils (30) beziehungsweise des Dichtsitzes (32) des Sitzventils (30) zur Querschnittsfläche der Betätigungsstange (40) beziehungsweise eines vorderen Endes (43) der Betätigungsstange (40) größer 4,5, insbesondere größer 5, bevorzugt größer 6, insbesondere bevorzugt größer 7 ist.

4. Druckregelventil nach einem der vorhergehenden Ansprüche, **dadurch gekennzeichnet, dass** an dem, in Strömungsrichtung (a) des Mediums gesehenen, ersten Sitzventil (30) die Ansichtsfläche der Betätigungsstange (40) kleiner 1 mm², insbesondere kleiner 0,8 mm², bevorzugt kleiner 0,7 mm² ist.

5. Druckregelventil nach einem der vorhergehenden Ansprüche, **dadurch gekennzeichnet, dass** die Betätigungsstange (40) in die das erste Sitzventil (30) beschreibende Blendenöffnung (33) einsteht und der Durchmesser (d) zumindest in diesem Bereich im wesentlichen konstant ist.

6. Druckregelventil nach einem der vorhergehenden Ansprüche, **dadurch gekennzeichnet, dass** das Ventilelement (31) des ersten Sitzventiles (30) als lose Kugel (31) ausgebildet ist, die in der geöffneten Stellung des Sitzventiles (30) von der Betätigungsstange (40) gegen den Strom (a) des Mediums vom Dichtsitz (32) abgehoben ist.

7. Druckregelventil nach einem der vorhergehenden Ansprüche, **dadurch gekennzeichnet, dass** an dem ersten Sitzventil (30) auf der dem Dichtsitz (32) abgewandten Seite eine insbesondere konusartige, insbesondere mit einem Öffnungswinkel α von 45° bis 90° aufweisende Aufweitung (34) vorgesehen ist.

8. Druckregelventil nach einem der vorhergehenden Ansprüche, **dadurch gekennzeichnet, dass** sich zwischen dem Dichtsitz (32) und der Aufweitung (34) eine zylindrische Blendenöffnung (33) befindet und das Verhältnis der Höhe (h) der Blendenöffnung (33) mit dem Durchmesser (d) des Dichtsitzes (32) kleiner 0,4, insbesondere kleiner 0,3 ist.

9. Druckregelventil nach einem der vorhergehenden Ansprüche, **dadurch gekennzeichnet, dass** das Druckregelventil (1) als Proportionaldruckregelventil ausgebildet ist.

10. Druckregelventil nach einem der vorhergehenden Ansprüche, **dadurch gekennzeichnet, dass** die Betätigungsstange (40), insbesondere die dem Ventilelement zugewandte Betätigungsstangenspitze (43) aus gehärtetem Material, bevorzugt mit einer Festigkeit von mehr als 800 N/mm², insbesondere bevorzugt mehr als 900 N/mm² oder aus einem keramischen Werkstoff besteht.

11. Druckregelventil nach einem der vorhergehenden Ansprüche, **dadurch gekennzeichnet, dass** die Regelstange (44) an ihrer, dem Ventilelement (31) zugewandten, Frontseite eine Bohrung (45) aufweist, welche die Betätigungsstange (40) aufweist.

12. Druckregelventil nach einem der vorhergehenden Ansprüche, **gekennzeichnet durch** eine Schweiß-, Kleb-, Löt- und Stemm- beziehungsweise Bördelverbindung zwischen der Betätigungsstange (40) und der Regelstange (44).

13. Druckregelventil nach einem der vorhergehenden Ansprüche, **dadurch gekennzeichnet, dass** die Wirkverbindung zwischen dem Anker und dem Ventilelement (31) gebildet ist durch eine einstückige, beziehungsweise aus mehreren Elementen fest verbundenen Einheit von Anker und Regelstange (44) oder zumindest eine Kraftübertragung zwischen den ansonsten einzelnen Elementen Anker und Regelstange (44) vorgesehen ist.
